## Europäisches Patentamt

## European Patent Office

## Office européen des brevets

(19)

(11) Numéro de publication : **0 200 633**
**B1**

(12) **FASCICULE DE BREVET EUROPÉEN**

(45) Date de publication du fascicule du brevet :
**11.01.89**

(51) Int. Cl.⁴ : **F 16 D 13/68**

(21) Numéro de dépôt : **86400858.6**

(22) Date de dépôt : **22.04.86**

(54) Amortisseur de torsion, notamment friction d'embrayage pour véhicule automobile.

(30) Priorité : **30.04.85 FR 8506581**

(43) Date de publication de la demande :
**05.11.86 Bulletin 86/45**

(45) Mention de la délivrance du brevet :
**11.01.89 Bulletin 89/02**

(84) Etats contractants désignés :
**DE IT**

(56) Documents cités :
**FR--A-- 2 411 999**
**FR--A-- 2 514 446**
**FR--A-- 2 526 906**
**FR--A-- 2 551 813**
**GB--A-- 2 054 099**
**US--A-- 2 251 128**

(73) Titulaire : **VALEO**
**64 Avenue de la Grande Armée**
**F-75017 Paris (FR)**

(72) Inventeur : **Blond, Marcel**
**68, rue des Oiseaux**
**F-77176 Savigny-le-Temple (FR)**

(74) Mandataire : **Gamonal, Didier**
**Société VALEO Service Propriété Industrielle 21, rue Blanqui**
**F-93406 Saint Ouen (FR)**

Jouve, 18, rue St-Denis, 75001 Paris, France

## Description

La présente invention concerne les dispositifs amortisseurs de torsion, en particulier les frictions d'embrayage, notamment pour véhicule automobile, du genre comportant au moins deux parties coaxiales montées mobiles l'une par rapport à l'autre, dans les limites d'un débattement angulaire déterminé et à l'encontre de moyens élastiques, à savoir, une première partie, qui comporte au moins un voile, et une deuxième partie, qui comporte au moins deux rondelles de guidage disposées de part et d'autre dudit voile, l'une des rondelles de guidage dite rondelle porteuse, étant solidaire, à sa périphérie, d'une couronne qui s'étend globalement axialement et radialement au-delà du voile et qui est dotée d'évidements, tandis que l'autre, dite rondelle de fermeture, présente radialement, à sa périphérie, de place en place, au moins deux tenons par lesquels elle est engagée et sertie dans des échancrures de ladite couronne.

Une disposition de ce type est décrite dans la demande de brevet FR-A-2 514 446 déposée le 14 octobre 1981. Pour éviter un affaiblissement préjudiciable de la couronne, on a proposé dans la sus mentionnée demande de décaler circonférentiellement l'évidement, prévu pour l'engagement à jeu d'un ergot du voile de moyeu, par rapport à l'échancrure.

Bien que donnant satisfaction, une telle réalisation ne facilite pas toujours le montage du voile de moyeu à l'intérieur de la couronne et/ou implique de surdimensionner la rondelle de guidage dotée de tenons.

La présente invention a pour objet de pallier ces inconvénients en créant une disposition qui, sans surdimensionner la rondelle de guidage à tenons, facilite le montage du voile de moyeu, assure une bonne tenue des rondelles de guidage et procure d'autres avantages.

Suivant l'invention un dispositif amortisseur de torsion du type sus indiqué est caractérisé en ce que, en combinaison, au moins deux évidements communiquent axialement avec au moins deux échancrures, et la couronne est renforcée par au moins une ceinture portée par celle-ci en étant décalée par rapport à la tranche des tenons de la rondelle de fermeture qui les porte.

Ainsi la ceinture, du fait de son décalage par rapport à la tranche des tenons, n'est pas découpée pour le passage de ceux-ci, ce qui permet d'avoir une bonne tenue des rondelles de guidage malgré un affaiblissement de celles-ci provoqué par les évidements communiquant avec les échancrures, qui sont propres à faciliter un montage d'une quelconque pièce à l'intérieur de la couronne.

Suivant une autre caractéristique de l'invention la ceinture est disposée axialement d'un seul côté de la tranche des tenons de la rondelle de fermeture.

Suivant une autre caractéristique la ceinture est une virole solidarisée à la couronne.

Suivant une autre caractéristique la virole est disposée du côté de la face de la rondelle de fermeture tournée vers la rondelle porteuse.

Grâce à cette disposition l'échancrure n'est pas forcément avant montage un épanouissement de l'évidement.

En effet l'échancrure peut être confondue avec l'extrémité de l'évidement et le sertissage de la rondelle de fermeture peut être réalisé par appui des tenons sur la ceinture, décalée par rapport à l'extrémité libre de la couronne, puis par fluage de matière prélevée dans l'un au moins des bords de l'échancrure.

Suivant une autre caractéristique la ceinture est d'un seul tenant avec la couronne.

Suivant une autre caractéristique, la ceinture est disposée du côté de la face de la rondelle de fermeture tournée à l'opposé de la rondelle porteuse.

On appréciera que l'on peut tirer parti de ces dispositions pour monter, à la faveur des évidements, au moins deux dispositifs amortisseurs de torsion entre la rondelle porteuse solidaire de la couronne et la rondelle de fermeture. En effet, les rondelles de guidages supplémentaires possèdent alors des tenons propres à coopérer circonférentiellement avec les évidements pour liaison en rotation et l'ensemble peut être monté aisément.

Les caractéristiques et avantages de l'invention ressortiront d'ailleurs de la description qui va suivre, en référence aux dessins schématiques annexés sur lesquels :

— la figure 1 est une demi-vue en coupe axiale de l'amortisseur de torsion selon l'invention,

— la figure 2 est une vue en coupe axiale de la couronne que comporte l'amortisseur de torsion suivant l'invention et de la rondelle porteuse dont est solidaire la couronne,

— la figure 3 est une vue partielle suivant la flèche III de la figure 1,

— la figure 4 est une vue analogue à la figure 1 pour une autre variante de réalisation,

— la figure 5 est une vue partielle selon la flèche V de la figure 4.

Sur ces figures, le dispositif amortisseur de torsion auquel est appliquée l'invention constitue, à titre d'exemple, une friction d'embrayage à moyeu amortisseur.

D'une manière générale cette friction, qui est notamment destinée aux embrayages pour véhicules automobiles, et en particulier pour véhicules automobiles lourds ou industriels comporte au moins deux parties A et B montées rotatives l'une par rapport à l'autre, dans les limites d'un débattement angulaire déterminé, et à l'encontre de moyens élastiques.

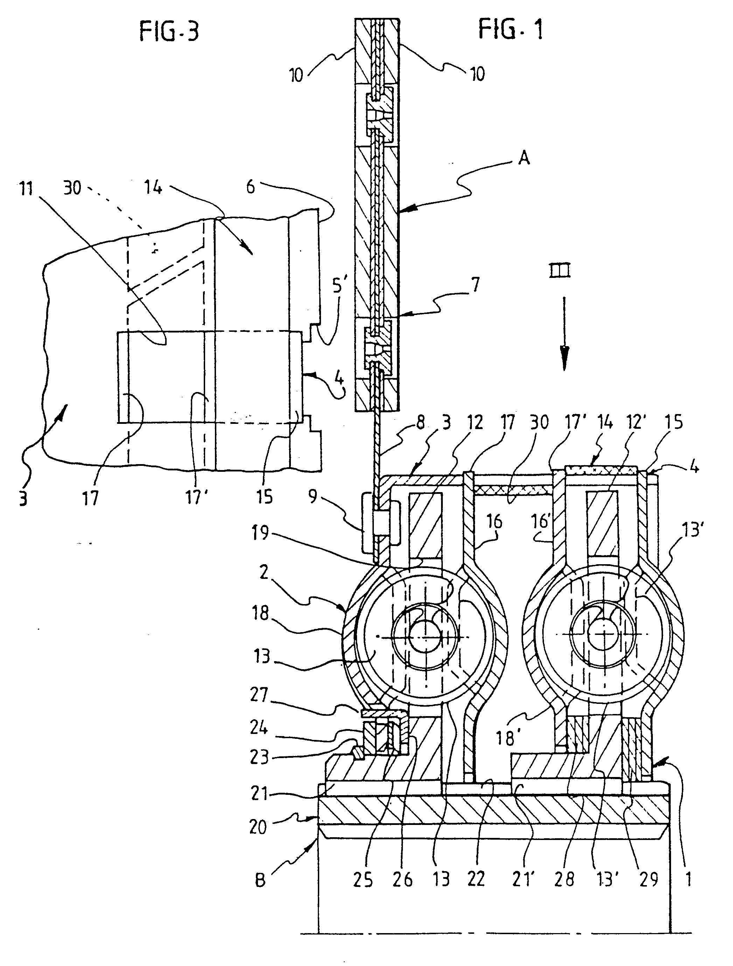

En pratique, dans la forme de réalisation des figures 1 à 3, la partie A comporte au moins deux rondelles de guidage 1, 2 qui sont convenablement solidarisées en rotation l'une par rapport à l'autre. A cet effet, la rondelle de guidage 2, appelée par commodité rondelle porteuse, est solidaire à sa périphérie, d'une couronne 3, qui s'étend globalement axialement, tandis que la rondelle de guidage 1, appelée ici par commodité rondelle de fermeture, présente radialement, à sa périphérie, de place en place, au moins deux tenons 4, par lesquels elle est engagée et sertie, suivant des dispositions décrites ci-après, dans des échancrures 5 prévues à cet effet dans la couronne 3, le long du bord libre 6 de celle-ci.

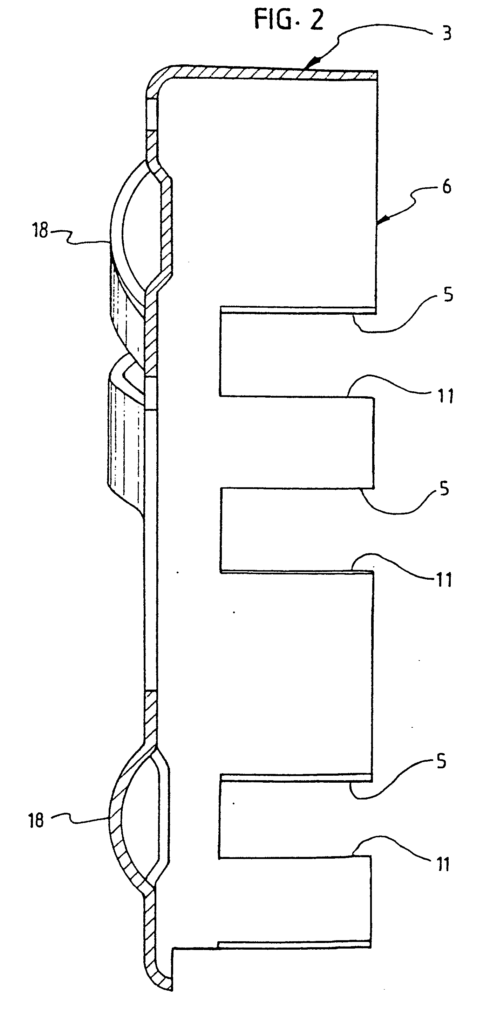

Plus précisément la profondeur de l'échancrure 5 est supérieure à l'épaisseur du tenon 4 et le sertissage a lieu par fluage de matière de l'un au moins des bords de l'échancrure 5, en pratique les deux. Dans la forme de réalisation représentée cette couronne 3 est d'un seul tenant avec la rondelle de guidage 2, l'ensemble étant par exemple venu d'un même flanc convenablement découpé et embouti (figure 2). En outre, la partie A porte un disque de friction 7 propre à être serré entre deux plateaux, non représentés, solidaires en rotation d'un arbre menant par exemple le vilebrequin du moteur.

Ce disque de friction 7 est formé d'un voile 8, qui à sa périphérie interne, est rapporté par des rivets 9, disposés radialement à l'intérieur de la couronne 3, sur la face externe de la rondelle porteuse 2, tandis que, à sa phériphérie externe, il est muni latéralement et de part et d'autre de garnitures de frottement 10. En outre, comme mieux visible à la figure 2, la couronne 3 est dotée d'évidements 11 s'étendant axialement. La partie B comporte au moins un voile 12 monté rotatif par rapport aux rondelles de guidage 1, 2 à l'encontre de moyens élastiques sous forme de ressorts du type ressorts à boudin 13, allongés sensiblement tangentiellement à une même circonférence de l'ensemble. Ce voile 12 est logé dans le volume interne délimité par la rondelle porteuse 2, la couronne 3, qui s'étend radialement au-delà dudit voile 12, et la rondelle de fermeture 1 à tenons 4. Ainsi les rondelles de guidage 1, 2 sont disposées de part et d'autre du voile 12 et forment avec la couronne 3 une boîte fermée par la rondelle de fermeture 1 ; à l'extérieur de ladite boîte est fixé le voile 8 par les rivets 9, c'est-à-dire sur la face extérieure de la rondelle pòrteuse 2 tournée à l'opposé de la rondelle de fermeture 1.

Suivant l'invention un dispositif amortisseur de torsion du type sus indiqué est caractérisé en ce que, en combinaison, au moins deux évidements 11 communiquent axialement avec au moins deux échancrures 5, et la couronne 3 est renforcée par au moins une ceinture 14 portée par celle-ci en étant décalée par rapport à la tranche des tenons 4 de la rondelle de fermeture 1 qui les porte.

Plus précisément dans la forme de réalisation représentée, deux voiles de moyeu 12, 12', deux ensembles de ressorts 13, 13' et deux autres rondelles de guidage 16, 16' solidarisées en rotation à la couronne 3, sont logées à l'intérieur du volume délimité par les rondelles de guidage 1, 2 et la couronne 3 ; le voile 12 étant disposé entre les rondelles de guidage 2 et 16 tandis que le voile 12' est disposé entre les rondelles de guidage 16' et 1.

La rondelle de guidage 16 est dotée de place en place, à sa périphérie externe de tenons 17, engagés à faible jeu dans les évidements 11 de largeur constante de la couronne 3, pour solidarisation en rotation à celle-ci. Cette rondelle de guidage 16 possède comme la rondelle de guidage 2 des logements 18 sous forme d'emboutis alternés ménagés alternativement axialement dans un sens et dans l'autre dans ces rondelles de guidage 16, 2 en correspondance de l'une à l'autre de celles-ci.

Le voile 12 est muni, de manière connue en soi, de fenêtres 19 et les ressorts 13 sont disposés pour partie dans les fenêtres 19 dudit voile 12 et pour partie dans les emboutis 18 des rondelles de guidage 2, 16. Ces dispositions étant connues dans la sus mentionnée demande FR-2 514 446, elles ne seront pas décrites plus en détail ici.

Ici, ledit voile 12 a, en coupe, une forme de L et est monté à sa périphérie interne sur un moyeu grâce à des cannelures 21 engagées sans jeu sur des cannelures 22 du moyeu 20, destiné à être monté sur l'arbre primaire de la boîte de vitesses. Des moyens de frottement sont prévus entre le voile de moyeu 12 et la rondelle de guidage 2.

Plus précisément la base du L du voile 12 traverse l'ouverture centrale de la rondelle de guidage 2 et le montage comporte par rapport au voile 12, un circlips 23 ancré dans la base du voile 12, une rondelle de frottement 24 disposée au contact de la rondelle porteuse 2 à l'extérieur de celle-ci, une rondelle élastique 25 et une rondelle d'application 26, au contact de la partie transversale du voile 12, disposées entre la rondelle 2 et le voile 12. La rondelle d'application 26 est solidaire en rotation de la rondelle de guidage 2 grâce à des pattes 27 s'engageant dans des ouvertures prévues à cet effet dans la rondelle 2. L'ensemble 2-12-16-13-23-24-25-26 forme ainsi un premier dispositif amortisseur de torsion dans lequel l'écartement axial entre les rondelles de guidage 2 et 16 est déterminé par coopération des tenons 17 avec le fond de l'évidement 11 axial formant épaulement. En pratique plus de deux évidements 11 et plus de deux échancrures 5 sont prévus et la couronne 3 a ainsi une forme de peigne avec une âme continue adjacente à la rondelle porteuse 2 et des branches entre les évidements 11.

La rondelle de guidage 16' est identique à la rondelle de guidage 16 et est munie de tenons 17' engagés à faible jeu dans les évidements 11 pour solidarisation en rotation à la couronne 3. Comme la rondelle de guidage 2, la rondelle de guidage 1 est dotée d'emboutis alternés en correspondance avec ceux 18' de la rondelle de guidage 16', pour logement des ressorts 13'. De même le voile 12' est identique au voile 12 et est, comme lui, engagé sans jeu par des cannelures 21' sur les cannelures 23 du moyeu 20 qui est commun aux deux voiles 12, 12'. L'ensemble 16'-12'-13'-1 constitue donc un deuxième dispositif amortisseur de torsion mais à la différence du premier, des rondelles de frottement 28, 29 sont disposées respectivement entre la rondelle 16' et le voile 12' et entre le voile 12' et la rondelle 1. Ces rondelles 28, 29 jouent, pour le voile 12', le rôle de rondelles d'écartement et définissent la position axiale dudit voile 12'.

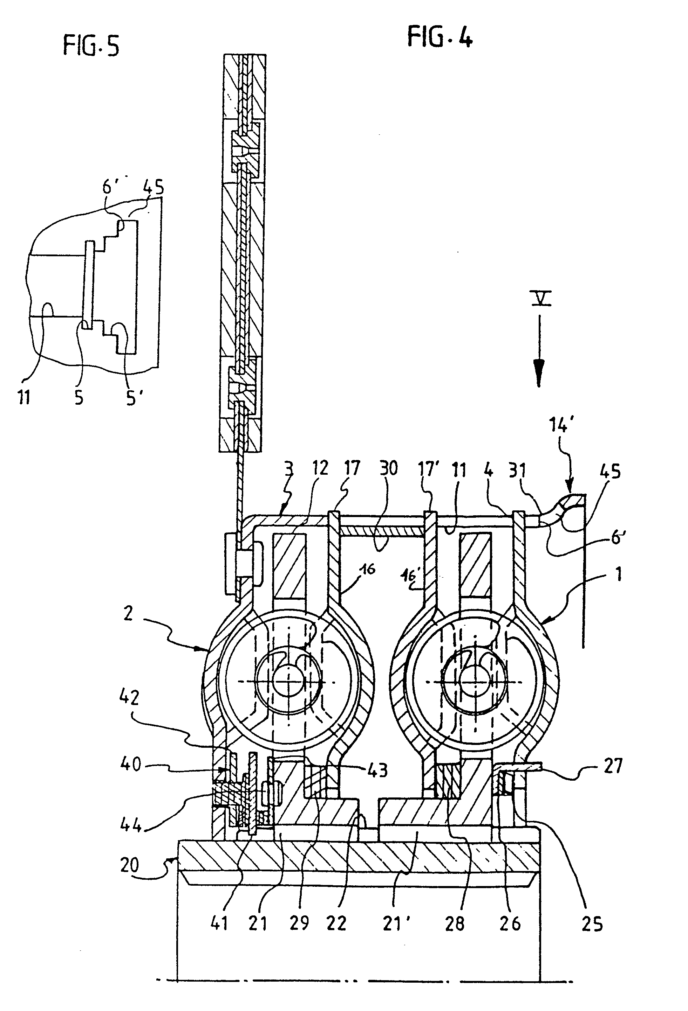

Dans cet exemple, l'écart axial entre les rondelles de guidage 16 et 16' est déterminé par une virole fendue 30 formant entretoise. Celle-ci est engagée radialement sous la couronne 3 au contact de celle-ci et s'appuie donc sur la périphérie externe des rondelles de guidage 17, 17'. La ceinture 14 selon l'invention consiste en une virole disposée sur la périphérie externe de la couronne 3 entre les deux rondelles de guidage 16' et 1. Cette virole 14 est solidarisée à la couronne 3 par exemple par emmanchement à force ou par soudage et peut être éventuellement fendue dans ce cas. Ainsi cette ceinture s'étend du côté de la face de la rondelle de guidage 1 tournée vers la rondelle de guidage 2 en étant décalée par rapport à la tranche 15 des tenons 4 de la rondelle de guidage 1 et peut former une entretoise entre les deux rondelles de guidage 1 et 16'. De plus, la ceinture 14 a un effet bénéfique pour le sertissage des tenons 4, pour cela il suffit de se rappeler que l'échancrure 5 a une profondeur supérieure à l'épaisseur des tenons 4 et que l'opération de sertissage consiste, les tenons 4 étant en appui sur la virole 14 décalée par rapport au bord libre 6 de la couronne 3, en un fluage de matière prélevée dans un au moins des bords de l'échancrure 5, en pratique dans les deux pour empiètement sur les tenons 4, comme mieux visible à la figure 3.

On appréciera que la virole 30 peut également faire office de ceinture en étant, par exemple, soudée à la couronne 3.

Ainsi, après la solidarisation à la couronne 3, la virole 14 forme un épaulement avantageusement sur toute la largeur de l'évidement 11 et délimite l'échancrure 5, ce qui permet d'avoir, avant montage, une échancrure 5 dans le prolongement de l'évidement 11 sans modification de largeur, une partie de ladite échancrure formant, après sertissage, un épanouissement 5'.

Grâce à la rigidification apportée par la ceinture 14, cette opération de sertissage est améliorée et les rondelles de guidage 16, 16' peuvent avoir des tenons 17, 17' identiques aux tenons 4 et donc être identiques entre elles.

Dans la variante de réalisation décrite à la figure 4 la ceinture 14' est d'un seul tenant avec la couronne 3 en étant disposée axialement du côté de la face de la rondelle de guidage 1 tournée à l'opposé de la rondelle de guidage 2 et donc vers l'extérieur. Cette ceinture 14' est disposée radialement au-dessus de la tranche des tenons 4, 17 et 17' et se raccorde à la partie courante de la couronne 3 par une zone inclinée 45. Le bord libre 6', dans lequel débouche l'échancrure ouverte 5 communiquant avec l'évidement 11, est défini par l'extrémité de la partie courante de la couronne 3 en dehors des zones inclinées 45, comme visible à la figure 5.

Cette réalisation diffère de la précédente notamment par l'introduction d'un dispositif amortisseur de torsion 40 pour les vibrations de ralenti.

En outre dans cette variante les voiles 12 et 12' sont montés par les cannelures 21, 21' à jeu dans les cannelures du moyeu et l'échancrure 5 constitue un épanouissement avant montage de l'évidement 11 pour formation d'épaulements, pour les tenons 4, nécessaires pour la liaison de la rondelle de fermeture 1 à la couronne 3.

Le dispositif amortisseur de torsion 40' est du type de celui divulgué dans le FR-A-2 551 813 et ne sera pas décrit en détail ici.

Il suffira de se rappeler qu'il est logé entre la rondelle 2 et le voile 12, qu'il comporte un voile de moyeu 41, solidaire du moyeu 20, deux rondelles de guidage 42, 43 solidaires l'une de l'autre par des rivets (non représentés) et accouplées au voile 41 par des ressorts. La rondelle de guidage 43 est attelée au voile 12 par des pions cylindriques 44. De plus dans cette variante la rondelle ondulée 25 et la rondelle d'application 26 sont disposées entre le voile 12' et la rondelle 1 tandis que les rondelles 28 et 29 sont disposées respectivement entre les rondelles 16' et le voile 12' et entre la rondelle 16 et le voile 12.

Ainsi dans ce cas, trois parties coaxiales mobiles les unes par rapport aux autres sont prévues l'une comprenant le voile 41, l'autre les voiles 12, 12' et enfin la dernière les rondelles de guidage 1, 2, 16, 16'.

On appréciera que, dans tous les cas, il résulte à l'évidence de la description, outre la possibilité, par exemple, pour un plateau de pression de venir au plus près de la couronne 3, que le montage de l'ensemble peut se faire par engagement axial, qui est facilité par la coopération des tenons 17, 17' des rondelles de guidage avec les évidements 11, ainsi que par le montage à cannelure des voiles 12, 12', sur le moyeu 20, l'ensemble étant verrouillé en final par sertissage des tenons 4 de la rondelle de fermeture 1.

Bien entendu la présente invention n'est pas limitée aux exemples de réalisation décrits. En particulier, alors que dans les réalisations décrites, la limitation du débattement entre les voiles 12, 12' et les rondelles de guidage 1, 2, 16, 16' a lieu par venue à spire jointive des ressorts 13, 13', cette limitation pourrait être réalisée comme dans la sus mentionnée FR-A-2 514 446 par coopération de tocs des voiles 12, 12' avec les évidements 11 prolongés en conséquence.

De même il est possible d'avoir plus de deux dispositifs amortisseurs de torsion entre les rondelles 1 et 2, et la couronne peut être légèrement conique en s'étendant globalement axialement, la communication des évidements et des échancrures peut être de dimension inférieure à leur dimension propre et plusieurs évidements peuvent déboucher dans une seule échancrure.

On appréciera que la ou les rondelles de guidage à tenon ne sont pas dimensionnées outre mesure, leurs dimensions étant déterminées par celles de la partie courante de la couronne, que l'invention est applicable dans le cas où un seul voile 12 et un seul dispositif amortisseur est prévu, et que la couronne peut présenter un décalage radial avec un évidement par portion axiale lorsque les voiles n'ont pas le même diamètre.

On notera que, dans tous les cas, la couronne 3 relie axialement à écartement fixe la rondelle porteuse 2 et la rondelle de fermeture 1, et constitue donc une entretoise axiale tout en favorisant une bonne ventilation.

## Revendications

1. Dispositif amortisseur de torsion, en particulier friction d'embrayage, notamment pour véhicule automobile, du genre comportant au moins deux parties coaxiales A, B montées mobiles l'une par rapport à l'autre, dans les limites d'un débattement angulaire déterminé et à l'encontre des moyens élastiques (13), à savoir, une première partie (B), qui comporte au moins un voile (12), et une deuxième partie (A), qui comporte au moins deux rondelles de guidage (1, 2) disposées de part et d'autre dudit voile, l'une des rondelles de guidage, dite rondelle porteuse (2), étant solidaire, à sa périphérie, d'une couronne (3) qui s'étend globalement axialement et radialement au-delà du voile et qui est dotée d'évidements (11), tandis que l'autre, dite rondelle de fermeture (1), présente radialement, à sa périphérie, de place en place, au moins deux tenons (4) par lesquels elle est engagée et sertie dans des échancrures (5) de ladite couronne, caractérisé, en combinaison, en ce que au moins deux évidements (11) communiquent axialement avec au moins deux échancrures (5), et en ce que la couronne (3) est renforcée par au moins une ceinture (11) portée par celle-ci en étant décalée par rapport à la tranche des tenons (4) de la rondelle de fermeture (1) qui les porte.

2. Dispositif amortisseur de torsion selon la revendication 1, caractérisé en ce que la ceinture (14) est disposée axialement d'un seul côté de la rondelle de fermeture.

3. Dispositif amortisseur de torsion selon la revendication 2, caractérisé en ce que la ceinture est une virole (14) solidarisée à la couronne (3).

4. Dispositif amortisseur de torsion selon la revendication 3, caractérisé en ce que la virole est disposée du côté de la face de la rondelle de fermeture (1) tournée vers la rondelle porteuse (2).

5. Dispositif amortisseur de torsion selon la revendication 4, caractérisé en ce que la virole (14) forme un épaulement pour les tenons (4).

6. Dispositif amortisseur de torsion selon la revendication 2, caractérisé en ce que la ceinture (14') est d'un seul tenant avec la couronne (3).

7. Dispositif amortisseur de torsion selon la revendication 6, caractérisé en ce que la ceinture (14) est disposée du côté de la face de la rondelle de fermeture (1) tournée à l'opposé de la rondelle porteuse (2).

8. Dispositif amortisseur de torsion selon l'une quelconque des revendications 1 à 5 dans lesquelles au moins deux voiles (12, 12') et quatre rondelles de guidage (1, 2, 16, 16') sont prévus, caractérisé en ce que deux des rondelles de guidage (16, 16') comportent des tenons (17, 17') engagés à faible jeu dans les évidements (11) pour liaison en rotation desdites rondelles (16, 16') avec la couronne (3).

## Claims

1. A torsion damping device, in particular for a friction clutch, especially for an automotive vehicle, of the kind comprising at least two coaxial parts (A, B) which are mounted so as to be movable with respect to each other within the limits of a predetermined angular displacement and against the action of resilient means (13), the said coaxial parts comprising a first part (B), which includes at least one radial plate (12), and a second part (A), which includes at least two guide rings (1, 2) which are disposed on either side of the said radial plate, one of the guide rings, namely a support ring (2), being fixed at its periphery to a crown member (3) which extends generally axially and radially beyond the radial plate and which is provided with openings (11), while the other guide ring, namely a closing ring (1), has disposed at intervals around its periphery at least two radially disposed tenons (4) by which it is engaged and located in notches (5) of the said crown member, the device being characterised in that, in combination, at least two of the said openings (11) communicate axially with at least two of the said notches (5), and in that the crown member (3) is reinforced by at least one encircling strap (14) carried by the crown member and being offset with respect to the set of said tenons (4) of the closing ring (1) of which they from part.

2. A torsion damping device according to Claim 1, characterised in that the encircling strap (14) is disposed axially on one side only of the closing ring.

3. A torsion damping device according to Claim 2, characterised in that the encircling strap is in the form of a band (14) secured to the crown member (3).

4. A torsion damping device according to Claim 3, characterised in that the band is disposed at the side of that face of the closing ring (1) which faces towards the support ring (2).

5. A torsion damping device according to Claim 4, characterised in that the band (14) provides a shoulder for the tenons (4).

6. A torsion damping device according to Claim 2, characterised in that the encircling strap (14') is integral with the crown member (3).

7. A torsion damping device according to Claim 6, characterised in that the encircling strap (14) is disposed to one side of that face of the closing ring (1) which faces in the opposite direction from the support ring (2).

8. A torsion damping device according to any one of Claims 1 to 5, in which at least two hub plates (12, 12') and four guide rings (1, 2, 16, 16') are provided, characterised in that two of the said guide rings (16, 16') include tenons (17, 17') which are engaged with a small clearance in the said openings (11) so as to couple the said rings (16, 16') with the crown member (3) for rotation together.

**Patentansprüche**

1. Drehschwingungsdämpfer, speziell für Kupplungsreibung, insbesondere für Kraftfahrzeuge, der Art, die über wenigstens zwei koaxiale Teile (A, B) verfügt, welche innerhalb der Grenzen eines bestimmten Winkelbereichs im Verhältnis zueinander drehbar und gegen elastiche Elemente (13) angebracht sind, und zwar ein erster Teil (B), der wenigstens eine Schale (12) aufweist, und ein zweiter Teil (A), der wenigstens zwei Führungsscheiben (1, 2) aufweist, die beiderseits der erwähnten Schale angeordnet sind, wobei eine der Führungsscheiben, die sogenannte Trägerscheibe (2), am Umfang aus einem Stück mit einem Kranz (3) besteht, der sich im wesentlichen axial und radial über die Schale hinaus erstreckt und der mit Aussparungen (11) versehen ist, während die andere Scheibe, die sogenannte Schließscheibe (1), am Umfang in radialer Richtung hier und da wenigstens zwei Zapfen (4) aufweist, mit deren Hilfe sie in bogenförmige Ausschnitte (5) am erwähnten Kranz eingreift und darin eingeklemmt wird, dadurch gekennzeichnet, daß in einer Kombination wenigstens zwei Aussparungen (11) in axialer Richtung mit wenigstens zwei bogenförmige Ausschnitte (5) kommunizieren, und gekennzeichnet dadurch, daß der Kranz (3) durch wenigstens einen daran befestigten Ring (14) verstärkt wird und im Verhältnis zu den Zapfen (4) der Schließscheibe (1), die sie trägt, versetzt ist.

2. Drehschwingungsdämpfer gemäß Anspruch 1, dadurch gekennzeichnet, daß der Ring (14) axial nur auf einer Seite der Schließscheibe angeordnet ist.

3. Drehschwingungsdämpfer gemäß Anspruch 2, dadurch gekennzeichnet, daß es sich bei dem Ring um ein aus einem Stück mit dem Kranz (3) bestehendes Band (14) handelt.

4. Drehschwingungsdämpfer gemäß Anspruch 3, dadurch gekennzeichnet, daß das Band auf der Seite der Vorderfläche der der Trägerscheibe (2) zugewandten Schließscheibe (1) angeordnet ist.

5. Drehschwingungsdämpfer gemäß Anspruch 4, dadurch gekennzeichnet, daß das Band (14) eine Schulter für die Zapfen (4) bildet.

6. Drehschwingungsdämpfer gemäß Anspruch 2, dadurch gekennzeichnet, daß der Ring (14') aus einem Stück mit dem Kranz (3) besteht.

7. Drehschwingungsdämpfer gemäß Anspruch 6, dadurch gekennzeichnet, daß der Ring (14) auf der Seite der Vorderfläche der der Trägerscheibe (2) entgegengesetzten Schließscheibe (1) angeordnet ist.

8. Drehschwingungsdämpfer gemäß einem der Ansprüche 1 bis 5, wobei wenigstens zwei Schalen (12, 12') und vier Führungsscheiben (1, 2, 16, 16') vorgesehen sind, dadurch gekennzeichnet, daß zwei der Führungsscheiben (16, 16') über Zapfen (17, 17') verfügen, die zur Herstellung einer Drehverbindung der erwähnten Scheiben (16, 16') mit dem Kranz (3) mit geringem Spiel in die Aussparungen (11) eingreifen.

FIG·3　　　　　　　　　　FIG·1

FIG. 2

FIG·5

FIG·4